# EUROPÄISCHE PATENTSCHRIFT

(11) **EP 0 545 944 B1**
(45) Veröffentlichungstag und Bekanntmachung des Hinweises auf die Patenterteilung: **17.08.1994**
(21) Anmeldenummer: 91912415.6
(22) Anmeldetag: 09.07.1991
(51) Int. Cl.: A23L 2/02, A23L 2/04, A23L 2/30, A23L 2/20

(54) **VERFAHREN ZUR GEWINNUNG VON NATURTRÜBEN FRUCHT- UND GEMÜSESÄFTEN**
PROCESS FOR OBTAINING NATURALLY CLOUDY FRUIT AND VEGETABLE JUICES
PROCEDE D'EXTRACTION DE JUS TROUBLES NATURELS DE FRUITS ET DE LEGUMES

(30) Priorität: 28.08.1990 DE 4027101
(43) Veröffentlichungstag der Anmeldung: 16.06.1993
(73) Patentinhaber: Westfalia Separator AG, 59302 Oelde (DE)
(72) Erfinder: NAGEL, Bernd, D-4930 Detmold (DE); BOTT, Ernst, Wilhelm, D-4740 Oelde-Stromberg (DE); GÜNNEWIG, Wolfgang, D-4720 Beckum-Vellern (DE); WUCHERPFENNIG, Karl, D-6200 Wiesbaden (DE)
(74) Vertreter: Stracke, Alexander, Dipl.-Ing.
(86) Internationale Anmeldenummer: EP9101279
(87) Internationale Veröffentlichungsnummer: WO9203067

(56) Entgegenhaltungen:
- EP-A- 0 049 056
- EP-A- 0 343 469
- FR-A- 2 253 465
- FR-A- 2 462 877
- Patent abstract of Japan, vol. 13, n 199 (C-594) 11 May 1989
- World Patents Index Latest, Section Ch, week 8222, Derwent Publications Ltd, London, GB

## Beschreibung

Die Erfindung bezieht sich auf ein Verfahren zur Gewinnung von naturtrüben Frucht- und Gemüsesäften, wobei eine aus zerkleinerten Früchten gewonnene Maische in einer Vollmantel-Schneckenzentrifuge in Fruchtfleischteile und Saft aufgetrennt wird.

Die Gewinnung von Fruchtsaft wird heute noch meist mit der konventionellen Methode des Pressens durchgeführt. Auch andere Verfahren der Entsaftung von Früchten werden vielfach diskutiert, konnten sich jedoch bisher in der Praxis nicht durchsetzen.

Auf dem Gebiet des Pressens ist eine intensive Entwicklung festzustellen. Hervorgerufen durch das Bestreben der Industrie nach Rationalisierung der Produktionsvorgänge, konnten auf dem Markt ständig neue Systeme eingeführt werden. Im Zentrum des Interesses steht nach wie vor die vollkontinuierliche Saftgewinnung.

Es hat nicht an Versuchen gefehlt, den Preßvorgang theoretisch und rechnerisch zu erfassen, jedoch werden die heutigen Obstpressen aufgrund von empirischen Erfahrungswerten gebaut. Während man früher dem angewandten Preßdruck eine entscheidende Rolle zuschrieb, zeigen zahlreiche Untersuchungen, daß der Zerkleinerungsgrad, die Schichtdicke und die Geschwindigkeit der Druckzunahme die Saftausbeute entscheidend beeinflussen. Hinzu kommt, daß die einzelnen Obstarten sich beim Pressen völlig anders verhalten, so daß man z. B. für Äpfel andere Preßsysteme benötigt als für Trauben.

Im Laufe der Jahrzehnte sind aufgrund von Beobachtungen für die einzelnen Fruchtsorten spezielle Verfahrensschritte zum Keltern entwickelt worden. Die Verarbeitung von Obst und Gemüse zu Säften beginnt nach dem Lagern, Waschen und Sortieren der Früchte mit dem Zerkleinerungsprozeß. Die dabei erhaltene in einem Vorratsbehälter aufgefangene und gelagerte Maische wird dann meist durch Pumpen in Pressen unterschiedlicher Konstruktionen gefördert. Lange Zeit dominierten hier die Packpressen und altbekannten Korbpressen. Sie waren zwar betriebssicher, verarbeiteten auch schwerpreßbares Obst, erforderten aber einen hohen Personalaufwand. Aus diesem Grunde werden sie heute nicht mehr eingesetzt.

Es hat nicht an Versuchen gefehlt, die bei diesen Pressen ablaufenden Vorgänge zu automatisieren. Bedeutung erlangten die Gunkel-Schenk-Presse, die Lambert-Presse und die ZAC-Presse.

In der Folgezeit versuchte man, die nach dem Prinzip der Packpressen arbeitenden Systeme durch eine sogenannte Horizontalautomatik zu ersetzen. Diese haben entweder einen gelochten oder geschlossenen Preßzylinder, in dem sich ein beweglicher Preßboden bewegen läßt. Sie gestatten gegenüber den Korbpressen einen rascheren Saftablauf, da sie einen längeren und infolgedessen engeren Korbzylinder haben. Auch besteht bei ihnen die Möglichkeit, durch Drehen des Zylinders ein nochmaliges Vorentsaften der Maische in der Presse durchzuführen und mittels eines Kettensystems schließlich die zusammengepreßte Maische durch Zurückziehen der Böden, d. h. ohne Öffnen der Kelter, aufzulockern. Infolgedessen erfordern sie weniger Handarbeit als die früher üblichen Korbpressen.

Ist die Maische aus dem Vorratsbehälter eingefüllt und eine Pressung erfolgt, so wird der bewegliche Preßboden zurückgezogen, wobei der Tresterkuchen aufgelockert wird. Es erfolgen nun weitere Preßstöße in der gleichen Weise; normalerweise preßt man 4 mal ab. Der Druck auf die Maische kann bei Horizontalkeltern nicht nur in der Weise erzeugt werden, daß man im Preßkorb einen oder zwei Böden verschiebt, sondern auch so, daß man im Preßkorb axial einen aufpumpbaren Gummibalg anordnet, der die Maische auf dem kürzesten Weg mit verhältnismäßig geringem Druck gegen die Mantelfläche drückt; dabei wird die Maische nicht zu einem immer kleineren und dichteren Kuchen zusammengepreßt, sondern in dünner Tresterschicht an die geschlitzte Wand des Preßkorbes gedrückt und auf diesem Wege ausgeweitet. Die Folge ist ein sehr guter Saftablauf. Das Prinzip dieser pneumatischen Horizontalpresse erfährt in der sogenannten Tankpresse eine Abwandlung: Bei diesem System wird die Maische in einen liegenden geschlossenen Preßzylinder gefördert, dessen oberer Teil durch eine dehnbare Gummiwand flüssigkeitsdicht vom unteren Teil getrennt ist. Durch Einleiten von Druckluft zwischen Tankoberteil und Gummiwand wird auf die Maische Druck ausgeübt, wodurch es zum Saftablauf durch ein Drainagesystem in der unteren "Tankhalfte" kommt. Obwohl die Einzelschritte des Keltervorganges voll automatisiert wurden, arbeiten die bisher beschriebenen Preßsysteme chargenweise. Den Technologen und Kaufmann interessiert aber eine vollkontinuierliche Verarbeitung von Kernobst.

Zu den einfachsten vollkontinuierlichen Pressen gehören die Schneckenpressen. Für die Gewinnung von Saft werden Schneckenpressen nur in geringem Umfang eingesetzt; für die Erzeugung von Fruchtwein und Obstbranntwein haben sie aber vor allen Dingen in Frankreich Bedeutung.

Zu einem völlig anderen, aber auch automatisch arbeitenden Pressentyp gehören die Bandpressen. Bei ihnen wird das auszupressende Gut mit Hilfe von zwei endlosen Bändern in einen sich stetig verengenden Spalt eingezogen. Die Entsaftung erfolgt bei den neu entwickelten Typen zwischen zwei Filterbändern. Diese bestehen aus starken Polyestergarnen und sind mit Metalldrähten verstärkt. Die Filterbänder dienen als Transport- und Entsaftungselemente.

Die Maische wird zunächst kontinuierlich auf ein Band aufgegeben und gleichmäßig verteilt. Nach Passieren einer Seihzone wird sie in einer keilförmigen Druckzone vorentsaftet und gelangt dann mit den Bändern in ein Walzensystem, wo die Endpressung erfolgt. Mit den Walzen werden die Bänder mehrfach umgelenkt. Sie sind zum Teil mit einem Siebmantel versehen, durch den der Saftablauf erfolgt. Die Trester werden durch Schaber von den Bändern abgenommen.

In industriellen Großbetrieben ist man zur besseren Ausnutzung von Kelteranlagen dazu übergegangen, Maische von weichen Früchten mit geringem Pektingehalt vorzuentsaften. Zu diesem Zweck läßt man die gemahlenen Früchte eine Zeitlang liegen. Während des 2- bis 3stündigen Stehens der Maische findet ein Abbau von makromolekularen Stoffen der Beeren durch fruchteigene Enzyme statt. Bekanntlich ist das Fruchtwasser an diese Stoffe gebunden; nach dem Abbau kann dann der Most schneller von den Festbestandteilen getrennt werden. Zur Vorentsaftung sind eine Reihe von Systemen entwickelt worden. Die einzelnen Konstruktionen sind recht unterschiedlich; im Prinzip haben sie mehr oder weniger schräg gestellte siebartige Böden oder Wände, die es erlauben, ca. 30 bis 50% des Fruchtsaftes vor dem eigentlichen Preßvorgang in kürzester Zeit ablaufen zu lassen. Nach der Vorentsaftung wird die Maische, die nun bereits ein erheblich verkleinertes Volumen hat, in die Presse gefördert.

Allen Kelterverfahren ist gemeinsam, daß sie mehr oder weniger lange dauern. Zwischen Zerkleinerung der Frucht und der Haltbarmachung des Preßmostes verstreichen unter den heutigen Bedingungen Zeiträume, die minimal zwischen einer und mehreren Stunden liegen. Während dieser Zeit kommt es in der Maische vor allen Dingen zu enzymatischen Umsetzungen und Veränderungen. Diese beruhen auf der Wirkung fruchteigener Enzyme, die in der intakten Frucht die Lebensvorgänge bewirken.

Bei geerntetem Obst und Gemüse handelt es sich um lebende Organe oder Organteile von Pflanzen, in denen der Stoffwechsel zunächst noch weitergeführt wird. Da die Nährstoffzufuhr durch die Mutterpflanze aber unterbrochen ist, kommt es nach und nach zur Auszehrung. Diese ist mit dem Verlust von Inhaltsstoffen verbunden. Fehlt Sauerstoff, so bilden sich abnorme Atmungsendprodukte, und schließlich stirbt das Gewebe ab. In der intakten Frucht unterliegen die enzymatischen Umsetzungen einem Steuermechanismus, der fortfällt, wenn die Zellen der Frucht durch Zerkleinerungsvorgänge zerstört werden. Es kommt dann zu chaotisch ablaufenden enzymatischen Ab- und Umbaureaktionen, durch die sich Fruchtinhaltsstoffe verändern.

Enzyme oder Fermente sind von lebenden Zellen gebildete Stoffe, die wie anorganische Katalysatoren an sich langsam verlaufende chemische Reaktionen zu beschleunigen oder zu lenken vermögen. Aus diesem Grunde bezeichnet man sie auch als Biokatalysatoren. Sie bestehen aus Eiweißkomponenten und können kolloidal in Lösung gehen. Im Körperhaushalt der Pflanzen und Tiere spielen sie eine große Rolle beim Aufbau, Umbau und Abbau von Substanzen und bei der Verwertung von Nährstoffen. In der lebenden Zelle werden eine große Anzahl verschiedenartiger Enzyme gebildet, da jedes nur ganz bestimmte Reaktionen durchführen kann. Eine kleine Menge eines Enzymes kann relativ große Mengen des von ihm angegriffenen Stoffes, dem sogenannten Substrat, umsetzen, ohne selbst verändert zu werden. Wegen ihrer Eiweißnatur werden Enzyme durch Wärmeeinwirkung geschädigt. Die vollständige Denaturierung der Eiweißkomponente führt zur Inaktivierung, die bereits bei 50 °C beginnen kann. Für einzelne Stoffklassen, oft sogar für die einzelnen Vertreter, gibt es besondere Enzyme. Selbst die einzelnen Stufen des Abbaues oder Aufbaues komplizierter Naturstoffe fallen ganz bestimmten Enzymen zu, so daß der Gesamtvorgang ein Ineinandergreifen verschiedener Enzymreaktionen ist.

Zu den fruchteigenen Enzymen, die bei der Lagerung und Verarbeitung von Obst und Gemüse eine wesentliche Rolle spielen, gehören die, die Pektinstoffe abbauen und die Polyphenole oxidieren. Beide Enzymgruppen bewirken sichtbare Veränderungen der Frucht oder der Maische. Als sichtbarer Nachweis der Wirkung von fruchteigenen pektolytischen Enzymen dient das Weich- und Mürbewerden von Kernobst bei der Lagerung. Das Weichwerden beruht auf dem Abbau von wasserunlöslichem Protopektin durch fruchteigene Enzyme zu wasserlöslichem Pektin. Pektinstoffe finden sich in allen höheren Pflanzen, und zwar vor allem in der primären Zellwand und der Mittellamelle. Sie halten als Kittsubstanz die Zellen zusammen und tragen zur Festigkeit des Gewebes bei. Durch fruchteigene Enzyme kann das Protopektin in lösliches Pektin übergeführt werden. Infolge dieser Reaktion wird das Gewebe gelockert, und die Frucht wird weich. Das wasserlöslich gewordene Pektin kann, unterstützt durch den pH-Wert, mit dem Zucker reagieren und gelartige Verbindungen bilden. Dadurch wird die Preßarbeit erschwert und die Saftausbeute beim Keltern vermindert. Der Pektinabbau ist normalerweise aber nicht mit der Spaltung des Protopektins beendet, auch das dabei gebildete wasserlösliche Pektin wird durch fruchteigene Enzyme weiter abgebaut. Diesen Umstand kann man sich nun wieder technologisch zunutze machen, indem man nicht nur Kernobstmaische, sondern auch die von Beeren- und Steinobst vor dem Abpressen mehrere Stunden stehen läßt. Dadurch wird die Maische wieder preßfähig, und man erhält Moste mit niedrigerer Viskosität, in denen das Pektin weitgehend abgebaut ist. Wesentlicher Baustein der Pektinstoffe ist die D-Galakturonsäure, die α (1 → 4) glykosidisch zu einer Polyuronidhauptkette verknüpft ist. Zwei Drittel der Carboxylgruppen sind mit Methylalkohol verestert. Die Hauptkette kann Seitenketten tragen. Neben Cellulose bilden die Pektinstoffe die Hauptkomponenten der primären Zellwand. Sie sind verantwortlich für die Textur von Obst und Gemüse und bilden die sogenannte Mittellamelle, wie bereits ausgeführt wurde. Die die Zellwände bildenden und verkittenden polymeren Substanzen lassen sich zum großen Teil durch Enzyme in die Bausteine oder niedermolekulare Bruchstücke spalten. Dadurch zerfällt das Fruchtgefüge in eine Flüssigkeit, in der die Fruchtinhaltsstoffe gelöst und die unlöslichen Anteile suspendiert sind.

Bekanntlich führt eine Oxidation durch Luftsauerstoff zur Bräunung von Fruchtteilen oder -saft. Diese ist eine weitere sichtbare Veränderung von Fruchtinhaltsstoffen. Sie werden durch fruchteigene Polyphenoloxydase, die in und unter den Schalen oder Häuten lokalisiert sind, hervorgerufen. Dabei werden Polyphenole in die chinoide Form übergeführt, die kondensieren kann, wobei schließlich sogenannte rotbraune Phlobaphene entstehen, die unlöslich werden können und Anlaß zu Trübungen und Depotbildung sind.

Unter dem Begriff Polyphenole versteht man ein breites Spektrum phenolischer Substanzen aus dem Pflanzenreich. Dabei handelt es sich im wesentlichen um Phenolcarbonsäuren und deren Verbindungen und um Flavonoid-Abkömmlinge. Sie werden auch als Pflanzenphenole bezeichnet. Polyphenoloxidasen gelangen zu einem kleinen Teil in löslicher Form, zum weitaus größeren Teil aber an suspendierte Trubstoffe gebunden, in den Preßmost. Polyphenoloxidasen finden sich in Pilzen, Gemüsen und Früchten. Für die Obstverarbeitung sind vor allem die Tyrosinase und Laccase von Bedeutung. Tyrosinase kommt in Äpfeln und gesunden Trauben vor und spielt deshalb im Getränkebereich eine Rolle. Sie liegt membrangebunden in den Zellen vor. Mit Ausnahme von Äpfeln und Erdbeeren enthalten fast alle heimischen Früchte und Gemüsesorten Laccase. Weiter ist sie in einigen tropischen Früchten wie Kiwi und Banane enthalten (Ausnahme Ananas). Gesunde Trauben enthalten nur Tyrosinase und keine Laccase, wird jedoch botrytisfaules Lesegut verarbeitet, so enthält der Preßmost dieses Enzym. Je nach Botrytisstamm und Fäulnisgrad werden unterschiedliche Mengen mit unterschiedlicher Enzymaktivität produziert.

Die Laccase ist im Zellsaft löslich. Sie besitzt eine viel größere Oxidationsfähigkeit als die Tyrosinase und greift nicht nur die Monophenole und ortho-Diphenole, sondern auch die meta- und para-Diphenole sowie Diamine und Ascorbinsäure an. Die Polyphenoloxidasen sind Sauerstoffüberträger, die den Sauerstoff z. B. auf die farblosen Phenolverbindungen übertragen. Diese werden zu gefärbten Chinonen aufoxidiert und anschließend durch weitere Dehydrierungsreaktionen zu höhermolekularen Kondensationsprodukten mit verminderter Löslichkeit umgebaut. Durch weitere Oxidationen und Kondensationsreaktionen werden die Moleküle vergrößert, so daß sie vom Saft abgetrennt werden können oder gar von selbst ausfallen. Die durch Enzymwirkung gebildeten Chinone bilden durch rein chemische Kondensationsreaktionen die dunkelgefärbten Produkte (Phlobaphene). Abhängig von äußeren Bedingungen wie Temperatur und Luftzutritt, pH-Wert und Gesamtsäure sowie Gehalt an Polyphenoloxidase laufen die Kondensationsreaktionen mit unterschiedlicher Geschwindigkeit ab. So verfärben sich Kernobst- und Traubenmaischen und die daraus hergestellten Säfte relativ rasch.

Die Ausführungen zeigen eindeutig, daß es mit den heute üblichen Keltermethoden nicht gelingen kann, Frucht- und Gemüsesäfte ohne enzymatische Veränderungen von Fruchtinhaltsstoffen herzustellen. Der Zerkleinerungsprozeß führt zum teilweisen Fortfall des Steuermechanismus für die enzymatisch bedingten Stoffumsätze in der Zelle. Infolgedessen kommt es zu chaotischen Ab- und Umbaureaktionen, die während der Lagerung oder Vorratshaltung, bei der Vorentsaftung der Maische, während des Füllvorganges der Presse und während des Pressens selbst ablaufen. Die enzymatischen Reaktionen setzen sich auch im Most fort, da er normalerweise nicht sofort erhitzt werden kann, um die Enzyme zu inaktivieren und die Mikroorganismen abzutöten. Die Wärmebehandlung erfolgt üblicherweise in einem Plattenapparat, der zwar von Säften mit Feintrub durchströmt werden kann, aber eine Abtrennung von groben Trubteilchen, die beim Pressen zwangsläufig mit in den Most gelangen, erforderlich macht. Infolgedessen müssen die Säfte vor der Erhitzung im Plattenapparat gesiebt und/oder separiert werden, Bearbeitungsschritte, die auch wieder Zeit erfordern. Diese wird noch dadurch verlängert, daß vor und nach der Abtrennung grober Fruchtfleischteilchen Auffang- oder Puffergefäße erforderlich sind.

In der DE-PS 960 512 ist auch bereits vorgeschlagen worden, eine mit bereits abgetrenntem Saft verdünnte Maische in einer Vollmantel-Schneckenzentrifuge in Feststoffe und Saft aufzutrennen. Wegen der vorbeschriebenen zeitlichen Abläufe der bisher bekannten Kelterverfahren kommt es in der Maische zu den genannten enzymatischen Umsetzungen und Veränderungen, die u. a. auch die Effektivität des zentrifugalen Trennvorganges in einer Vollmantel-Schneckenzentrifuge nachteilig beeinflußt. Aus diesem Grunde hat sich dieses Verfahren bisher nicht durchsetzen können.

Aufgabe der vorliegenden Erfindung ist es, das bekannte Verfahren so weiterzuentwickeln, daß unerwünschte enzymatische Umsetzungen und Veränderungen während der Saftgewinnung unterbleiben und die Effektivität der VollmantelSchneckenzentrifuge erhöht wird.

Diese Aufgabe wird dadurch gelöst, daß die Abtrennung von unlöslichen Fruchtfleischteilen mit der Vollmantel-Schnekkenzentrifuge zeitlich unmittelbar nach dem Zerkleinern der Früchte erfolgt und daß unmittelbar danach eine Inaktivierung fruchteigener pektolytischer Enzyme und Polyphenoloxidasen durch Erhitzung des aus der Vollmantel-Schnekkenzentrifuge ablaufenden Saftes erfolgt.

Es hat sich nun überraschenderweise gezeigt, daß eine Herstellung naturtrüber Säfte ohne enzymatische Veränderungen von Fruchtinhaltsstoffen möglich ist, indem man unter Verzicht auf Auffang- und Puffergefäße sowie Pumpen Obst oder Gemüse unmittelbar nach einer geeigneten Zerkleinerung mit einer Vollmantel-Schneckenzentrifuge von der Masse der unlöslichen Anteile abtrennt und den erhaltenen Saft sofort einer Erhitzung zur Inaktivierung der Enzyme und Abtötung der Mikroorganismen unterzieht. Es ist also mit dem erfindungsgemäßen Verfahren möglich, einen naturbelassenen Frischsaft zu erzeugen. Durch die Kombination der drei Verfahrensschritte - Zerkleinerung, Feststoffabtrennung durch Vollmantel-Schneckenzentrifuge und Erhitzung - beansprucht der Keltervorgang nur wenige Sekunden Zeit, so daß es praktisch zu keinen enzymatischen Ab- und Umbaureaktionen kommt. Der aus der Vollmantel-Schneckenzentrifuge ablaufende Saft kann im Gegensatz zu den bekannten Verfahren ohne vorherige Siebung und/oder Separierung im Erhitzer pasteurisiert werden.

Es hat sich weiter überraschenderweise gezeigt, daß eine Fein- und Feinstzerkleinerung der Früchte vor der Phasentrennung in der Vollmantel-Schneckenzentrifuge nicht notwendig ist. Bei Obst und Gemüse mit harter Textur wie Äpfel und Karotten genügt eine Vermahlung zu einer "körnigen" Maische, dabei sollte die Korngröße im Schnitt 3 mm betragen. Diese Arbeitsweise hat den Vorteil, daß ein großer Teil der Zellen des Fruchtgewebes intakt bleibt und somit der Steuermechanismus für die enzymatischen Reaktionsabläufe erhalten bleibt. Die Entsaftung der Zellen erfolgt dann erst in der Vollmantel-Schneckenzentrifuge. Weiches Obst und Gemüse wie Trauben oder Tomaten brauchen vor dem zentrifugalen Trennvorgang mittels Vollmantel-Schneckenzentrifuge nur gequetscht zu werden. Zu diesem Zweck eignen sich die gebräuchlichen Glatt-, Riffel- oder Flügelwalzenmühlen. Früchte, deren Farbstoffe in der Schale lokalisiert sind, müssen nach der Zerkleinerung erwärmt werden, damit die Zellen der Hülse für die Farbstoffe durchlässig werden.

Vollmantel-Schneckenzentrifugen bestehen aus einer mit hoher Drehzahl laufenden ungelochten Trommel, in der eine Austragschnecke mit einer Differenzdrehzahl rotiert. Zur Saftgewinnung wird die Maische unmittelbar nach der Zerkleinerung der Früchte durch ein zentrales Einlaufrohr in die Einlaufkammer der Schnecke eingeführt. Von dort werden die spezifisch schweren unlöslichen Bestandteile der Früchte an die Innenseite des Trommelmantels geschleudert und dort abgelagert, während die spezifisch leichte Flüssigkeit darüber einen Ring bildet. Durch die mit unterschiedlicher Drehzahl rotierende Schnecke wird der abgeschiedene Feststoff erfaßt und zum Austragsende transportiert. Der naturtrübe Saft wird durch eine Schälscheibe erfaßt und unter Druck abgeleitet. Trommel und Schnecke rotieren in gleicher Drehrichtung, jedoch mit unterschiedlicher Drehzahl.

Durch die richtige Kombination der drei Verfahrensschritte erhält man z. B. aus Äpfeln einen naturtrüben Saft, dessen Trubbestandteile im Gegensatz zu naturtrüben Säften, die durch Pressen gewonnen und gelblich-braun gefärbt sind, von praktisch rein weißer Farbe wie das Apfelfruchtfleisch sind. Dieser Befund zeigt, daß die Polyphenoloxidasen beim Keltern praktisch nicht zur Wirkung gekommen sind. Man kann die Sicherheit gegen Oxidationsreaktionen aber noch weiter erhöhen, indem man den gesamten Kelterprozeß unter Schutzgas in einer Vollmantel-Schneckenzentrifuge in gasdichter Ausführung vornimmt.

Zur Entfernung der in den Früchten eingeschlossenen Gase und trotz der Schutzmaßnahmen doch aufgenommenen und gelösten Gase können diese durch Entgasung unmittelbar nach Verlassen der Vollmantel-Schneckenzentrifuge und unmittelbar vor der Erhitzung oder beim Erhitzungsvorgang selbst kontinuierlich aus dem frisch gewonnenen Saft entfernt werden. Obwohl es bereits nur durch schnelles Zerkleinern, zentrifugales Trennen und Erhitzen gelingt, nicht oxidierte Säfte herzustellen, können die aufgeführten zusätzlichen Maßnahmen die Gefahr kleiner Oxidationsreaktionen weiter vermindern.

Es hat sich nun weiter überraschend herausgestellt, daß die Viskosität des Saftes für die Stabilität der Trübung eine absolut untergeordnete Rolle spielt; es kommt vielmehr darauf an, daß eine bestimmte Menge wasserlösliches Pektin vorhanden sein muß. Für die Viskosität eines Saftes spielt die Molekülgröße bzw. das Molekulargewicht der Pektinstoffe die entscheidende Rolle, während deren Menge in dieser Hinsicht von untergeordneter Bedeutung ist. Für die Trubstabilität liegen die Verhältnisse dagegen umgekehrt: entscheidend für eine optimale Stabilität ist die Menge an wasserlöslichen Pektinstoffen und nicht deren Molekulargewicht. Diese umlagern durch elektrostatische Anziehungskräfte den Feintrub des frisch gekelterten Saftes und sind somit Schutzkolloide. Infolge ihrer elektrostatisch gleichsinnigen Ladung stoßen sich die Feintrubpartikel gegenseitig ab und bilden so ein absolut stabiles Gefüge, in dem es zu keiner nennenswerten Sedimentation kommt.

Es wurde bereits ausgeführt, daß der enzymatische Abbau von wasserlöslichem Pektin nicht zur Zerlegung in dessen Bausteine - Galacturonsäure und Methylalkohol - führt. Normalerweise wird nur etwa 10% der Pektinstoffe zu den beiden Hauptbausteinen abgebaut, während der Rest in Form niedermolekularer Bruchstücke vorhanden bleibt. Diese bilden dann die für die Trubstabilität verantwortlichen Schutzkolloide.

Schließlich wurde auch überraschend gefunden, daß eine optimale Trubstabilität erreicht wird, wenn in den Früchten ca. 2 g/kg wasserlösliche Pektinstoffe bzw. deren Bruchstücke vorhanden sind. Nach Literaturangaben enthalten Äpfel ca. 8 g/kg Pektinstoffe. Diese liegen in der reifenden Frucht zunächst in wasserunlöslicher Form als Protopektin vor. Bei der Reife und vor allen Dingen bei der Lagerung nach der Ernte wird es durch fruchteigene Enzyme in wasserlösliches Pektin und dessen Bruchstücke gespalten. Dieser Abbau hängt im wesentlichen von den Lagerbedingungen ab. Wartet man nun ab, bis ca. 2 g/kg wasserlösliches Pektin vorliegt, so läßt sich aus diesen Äpfeln ein trubstabiler Saft mit optimalen Eigenschaften nach dem erfindungsgemäßen Verfahren herstellen.

Der Trubgehalt und die Partikelgröße des Trubes lassen sich auf vorteilhafte Weise durch Verwendung einer Tellerzentrifuge einstellen, die dem Erhitzer nachgeschaltet ist. Gegenüber Filtern sind Tellerzentrifugen in der Lage, aus dem natürlich trüben Fruchtsaft genau die Bestandteile herauszutrennen, die das spätere Aussehen und den Geschmack beeinflussen können. Dabei verbleiben die gewünschten Saftbestandteile im Produkt. Ein solches Verfahren wird auch als Klassieren bezeichnet. Für die Trübung und ihre gleichmäßige Verteilung sind die aus dem Stoke'schen Gesetz bekannten physikalischen Parameter gültig. Fruchtpartikel setzen sich demgemäß nur ab, wenn sie im Durchmesser groß genug sind, ein Unterschied zwischen Flüssigkeits- und Teilchendichte besteht, die Viskosität der Flüssigkeit nicht sehr hoch ist und die Erdbeschleunigung für das schnelle Absetzen ausreicht. Diese Gesetzmäßigkeit ist von Vorteil, wenn aus einem Stoffgemisch nur die Teilchen herausgetrennt werden sollen, die größer sind oder eine höhere Dichte haben als die Partikel, die in der Flüssigkeit verbleiben sollen. Mit Tellerzentrifugen können deshalb die unerwünschten Trubpartikel durch eine entsprechende Einstellung der Zentrifuge aus den Säften entfernt werden.

Das mit der Tellerzentrifuge erzielte Ergebnis kann noch dadurch verbessert werden, daß der Trub zuvor einem Hochdruck-Homogenisator zugeführt wird, der eine bessere Verteilung der Trubpartikel bewirkt.

Aus naturtrüben Fruchtsäften lassen sich durch entsprechende keltertechnische Maßnahmen auch klare herstellen. Das ist auch der Fall bei Erzeugnissen, die nach dem erfindungsgemäßen Verfahren hergestellt wurden. Zu diesem Zweck werden die naturbelassenen Frischsäfte mit pektolytischen Enzympräparaten behandelt. Dabei kommt es zum Abbau der wasserlöslichen Pektinstoffe bzw. deren Bruchstükke und damit der Schutzkolloide. Dadurch entfällt deren stabilisierende Wirkung, und die Trubstoffe können sedimentieren.

Die für den Pektinabbau nötigen Enzympräparate kann man aus Mikroorganismen gewinnen, da diese vielfach Enzymsysteme enthalten, die die gleichen Wirkungen wie die fruchteigenen entfalten. Mikroorganismen werden in zunehmendem Maße die Hauptquelle für industriell hergestellte Enzympräparate. Wegen der hohen Wachstumsrate ist das Potential für die Enzymherstellung faktisch unbegrenzt. Die Gewinnung geht in der Weise vor sich, daß man die Enzyme nach Zerstörung der Zellen von ausgewählten und speziell kultivierten Mikroorganismen aus dem Kulturmedium extrahiert. Aus dem wäßrigen Rohextrakt werden die Proteine einschließlich der gewünschten Enzyme ausgefällt. Das Präzipitat wird wieder aufgelöst und nochmals gefällt, womit eine gewisse Reinigung verbunden ist. Der Niederschlag kann dann abfiltriert oder zentrifugiert und evtl. sogar getrocknet werden. Zum Teil werden die Präparate auch auf feste Trägersubstanz aufgezogen. Als Träger dienen heute im allgemeinen Zuckerstoffe. Es ist aber auch möglich, die ausgefällten Enzymgemische nach Auflösen in Wasser in flüssiger Form in den Handel zu bringen.

Aus der geschilderten Methode der Enzymgewinnung geht nun aber hervor, daß die zur Behandlung von Lebensmitteln angebotenen Produkte keinesfalls hochgereinigte Enzyme sind. Aus diesem Grunde spricht man besser nicht von Enzymen, sondern von Enzympräparaten.

Nach der Enzymbehandlung können die Säfte in der üblichen Weise durch Flockungsmittel weiter "vorgeklärt" werden. Dazu eignet sich die sogenannte "Gelatine-Kieselsol-Schönung". Anschließend werden die Erzeugnisse durch Anschwemm-, Schichten- oder Cross-Flow-Membranfiltration vollständig geklärt. Im Gegensatz zu den konventionell hergestellten klaren Säften enthalten die nach dem erfindungsgemäßen Verfahren gewonnenen aber keine oxidierten Fruchtinhaltsstoffe und sind somit in höherem Maße naturbelassen.

Nach dem erfindungsgemäßen Verfahren lassen sich Fruchtsäfte gewinnen, die praktisch keine Veränderungen durch fruchteigene Enzyme erfahren haben. Dadurch kommt man zu naturtrüben Produkten mit optimaler Trubstabilität und ohne oxidierte Fruchtinhaltsstoffe. Diese lassen sich durch keltertechnische Maßnahmen zu klaren weiterverarbeiten, in denen Inhaltsstoffe in der Form vorliegen, wie sie in den Früchten vorkommen, also nicht oxidiert sind.

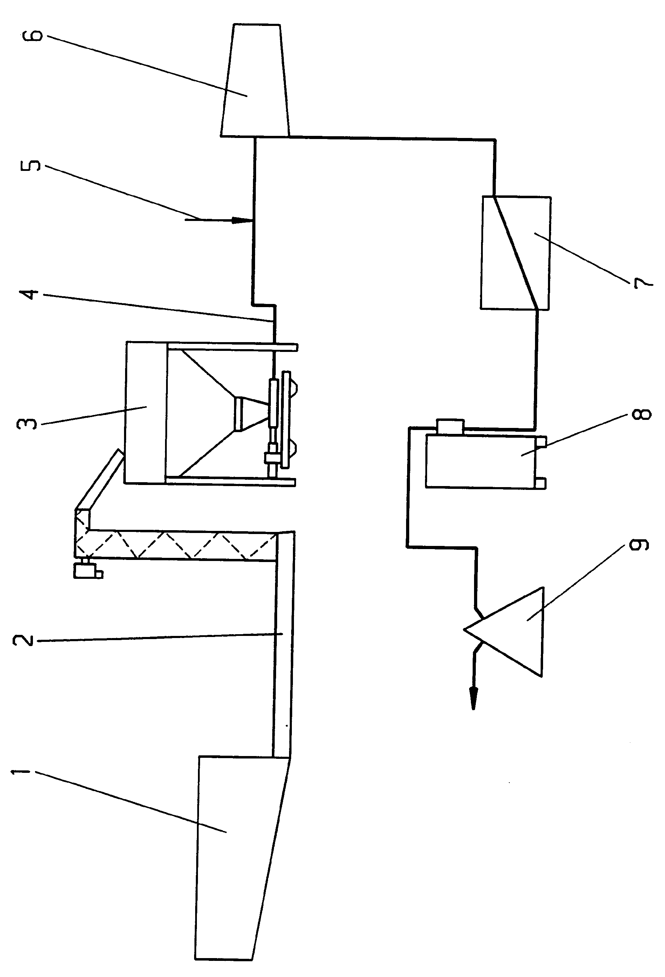

Ein Ausführungsbeispiel der Erfindung ist in der Figur dargestellt und wird nachstehend näher erläutert.

Das zur Verarbeitung angelieferte Kernobst wird in loser Schüttung in Silos 1 gelagert und vor dem Zerkleinern in einem Schwemmkanal 2 gründlich gewaschen. Anschließend wird das Obst mittels einer Obstmühle 3 zerkleinert und die so erzeugte Maische über eine geschlossene Leitung 4 unter Zuführung von Zitronensäure über Leitung 5 einer Vollmantel-Schneckenzentrifuge 6 zugeführt, in der eine Trennung der Maische in Fruchtfleischanteile und Saft erfolgt. Der Saft wird in einen Erhitzer 7 geleitet zur Inaktivierung der fruchteigenen Enzyme und Polyphenoloxidasen. In einem nachfolgenden Hochdruck-Homogenisator 8 werden die in dem Saft vorhandenen Feststoffpartikel dispergiert und anschließend der Trubgehalt des Saftes und die Partikelgröße des Trubes mittels einer Tellerzentrifuge 9 auf die gewünschten Werte eingestellt. Danach kann der Saft eingelagert werden.

## Patentansprüche

1. Verfahren zur Gewinnung von naturtrüben Frucht- und Gemüsesäften, wobei eine aus zerkleinerten Früchten gewonnene Maische in einer Vollmantel-Schneckenzentrifuge in Fruchtfleischteile und Saft aufgetrennt wird, **dadurch ge****kennzeichnet**, daß die Abtrennung von unlöslichen Fruchtfleischteilen mit der Vollmantel-Schneckenzentrifuge zeitlich unmittelbar nach dem Zerkleinern der Früchte erfolgt und daß unmittelbar danach eine Inaktivierung fruchteigener pektolytischer Enzyme und Polyphenoloxidasen durch Erhitzung des aus der Vollmantel-Schneckenzentrifuge ablaufenden Saftes erfolgt.

2. Verfahren nach Anspruch 1, dadurch gekennzeichnet, daß die Früchte vor dem Entsaften mit der Vollmantel-Schnekkenzentrifuge zu einer "körnigen" Maische vermahlen werden, deren Korngröße max. 5 mm beträgt.

3. Verfahren nach Anspruch 2, dadurch gekennzeichnet, daß die Korngröße der Maische 3 mm beträgt.

4. Verfahren nach einem der Ansprüche 1 bis 3, dadurch gekennzeichnet, daß die Abtrennung der unlöslichen Fruchtfleischteile in der Vollmantel-Schneckenzentrifuge unter Schutzgas erfolgt.

5. Verfahren nach einem der Ansprüche 1 bis 4, dadurch gekennzeichnet, daß zwischen der Abtrennung der unlöslichen Fruchtfleischteile in der Vollmantel-Schneckenzentrifuge und der Erhitzung oder während der Erhitzung des Saftes eine kontinuierliche Entgasung erfolgt.

6. Verfahren nach einem der Ansprüche 1 bis 5, dadurch gekennzeichnet, daß vornehmlich Früchte mit einem Gehalt an wasserlöslichen Pektinstoffen von ca. 2 g/kg zur Erzeugung einer optimalen Trubstabilität verarbeitet werden.

7. Verfahren nach einem der Ansprüche 1 bis 6, dadurch gekennzeichnet, daß der Trubgehalt und die Partikelgröße des Trubes nach der Erhitzung mittels einer Tellerzentrifuge auf den gewünschten Wert eingestellt wird.

8. Verfahren nach Anspruch 7, dadurch gekennzeichnet, daß als Tellerzentrifuge eine selbstentleerende Zentrifuge verwendet wird.

9. Verfahren nach Anspruch 7 oder 8, dadurch gekennzeichnet, daß der Tellerzentrifuge ein Homogenisator vorgeschaltet ist.

10. Verfahren nach einem der Ansprüche 1 bis 9, dadurch gekennzeichnet, daß die naturtrüben Frucht- und Gemüsesäfte durch Enzymbehandlung und keltertechnische Maßnahmen wie Schönung und Filtration zur Erzeugung klarer nicht oxidierter Produkte geklärt werden.

## Claims

1. A process for obtaining naturally cloudy fruit and vegetable juices, wherein a mash obtained from crushed fruits is separated in an unperforated-drum screw centrifuge into fruit flesh pieces and juice, characterised in that the operation of separating insoluble fruit flesh pieces with the unperforated-drum screw centrifuge is effected at a time immediately after crushing of the fruits and that immediately thereafter inactivation of fruit-specific pectolytic enzymes and polyphenoloxidases is effected by heating the juice which runs out of the unperforated-drum screw centrifuge.

2. A process according to claim 1 characterised in that prior to the operation of removing juice with the unperforated-drum screw centrifuge the fruits are ground to a 'granular' mash whose grain size is a maximum of 5 mm.

3. A process according to claim 2 characterised in that the grain size of the mash is 3 mm.

4. A process according to one of claims 1 to 3 characterised in that the operation of separating the insoluble fruit flesh pieces in the unperforated-drum screw centrifuge is effected under a protective gas.

5. A process according to one of claims 1 to 4 characterised in that continuous degassing is effected between the operation of separating the insoluble fruit flesh pieces in the unperforated-drum screw centrifuge and the juice heating operation or during the juice heating operation.

6. A process according to one of claims 1 to 5 characterised in that principally fruits with a content of water-soluble pectin substances of about 2 g/kg are processed to produce optimum clouding stability.

7. A process according to one of claims 1 to 6 characterised in that the cloudiness content and the particle size of the cloudiness is adjusted to the desired value after the heating operation by means of a plate centrifuge.

8. A process according to claim 7 characterised in that a self-emptying centrifuge is used as the plate centrifuge.

9. A process according to claim 7 or claim 8 characterised in that a homogeniser is disposed upstream of the plate centrifuge.

10. A process according to one of claims 1 to 9 characterised in that the naturally cloudy fruit and vegetable juices are clarified by enzyme treatment and pressing process steps such as clearing and filtration to produce clear non-oxidised products.

## Revendications

1. Procédé pour l'extraction de jus de fruits et de légumes naturellement troubles, dans lequel une maische obtenue à partir de fruits hachés est séparée dans une centrifugeuse à vis à bol plein en parties de pulpe de fruit et en jus, caractérisé en ce que la séparation des parties de pulpe de fruit insolubles par la centrifugeuse à vis à bol plein se fait immédiatement après le hachage des fruits et qu'immédiatement après une inactivation des enzymes pectolytiques et des polyphénol-oxydases propres aux fruits est réalisée par chauffage du jus qui s'écoule de la centrifugeuse à vis à bol plein.

2. Procédé selon la revendication 1, caractérisé en ce que les fruits sont broyés avant l'extraction du jus avec la centrifugeuse à vis à bol plein jusqu'à donner une maische "granuleuse", dont la grosseur de grains est au maximum de 5 mm.

3. Procédé selon la revendication 2, caractérisé en ce que la grosseur de grains de la maische est de 3 mm.

4. Procédé selon l'une quelconque des revendications 1 à 3, caractérisé en ce que la séparation des parties de pulpe de fruit insolubles dans la centrifugeuse à vis à bol plein se fait sous gaz protecteur.

5. Procédé selon l'une quelconque des revendications 1 à 4, caractérisé en ce qu'un dégazage continu est réalisé entre la séparation des parties de pulpe de fruit insolubles dans la centrifugeuse à vis à bol plein et le chauffage ou pendant le chauffage du jus.

6. Procédé selon l'une quelconque des revendications 1 à 6, caractérisé en ce que, pour l'obtention d'un jus ayant une stabilité optimale de la turbidité les fruits traités ont de préférence une teneur en matières pectiques hydrosolubles de 2 g/kg.

7. Procédé selon l'une quelconque des revendications 1 à 6, caractérisé en ce que le taux de turbidité et la grosseur de particules du jus trouble sont amenés à la valeur souhaitée après le chauffage au moyen d'une centrifugeuse à plateau.

8. Procédé selon la revendication 7, caractérisé en ce qu'une centrifugeuse auto-vidante est utilisée comme centrifugeuse à plateau.

9. Procédé selon la revendication 7 ou 8, caractérisé en ce qu'un homogénéisateur est monté en amont de la centrifugeuse à plateau.

10. Procédé selon l'une quelconque des revendications 1 à 9, caractérisé en ce que les jus de fruits et de légumes naturellement troubles sont clarifiés par un traitement enzymatique et par des mesures de technique de pressage telles que la clarification et la filtration pour obtenir des produits clairs non oxydés.
